# FASCICULE DE BREVET EUROPEEN

(11) **EP 2 295 666 B1**
(45) Date de publication et mention de la délivrance du brevet: **27.10.2021**
(21) Numéro de dépôt: 10305832.7
(22) Date de dépôt: 28.07.2010
(51) Int. Cl.: E04C 2/04, E04C 2/06, E04C 2/288

(54) **PROCÉDÉ DE FABRICATION DE PANNEAUX AVEC ISOLATION INTEGRÉE ET D'UN TEL PANNEAU**
HERSTELLUNGSVERFAHREN FÜR DÄMMPANEELE UND SOLCH EIN DÄMMPANEEL
METHOD OF PRODUCTION FOR INSULATION PANELS AND SUCH AN INSULATION PANEL

(30) Priorité: 29.07.2009 FR 0955305
(43) Date de publication de la demande: 16.03.2011
(73) Titulaire: Maisons Naturelles en Béton de Chanvre, 41210 Neung-sur-Beuvron (FR)
(72) Inventeur: CHARVOZ, Laurent, 36110 Levroux (FR)
(74) Mandataire: Aquinov

(56) Documents cités:
- EP-A1- 0 924 175
- WO-A1-94/28264
- WO-A1-98/16697
- DE-C- 869 767
- US-A1- 2001 045 077

## Description

La présente invention concerne un procédé de fabrication de panneaux avec isolation intégrée notamment pour la réalisation de bâtiments.

L'invention couvre aussi le panneau ainsi obtenu.

On connaît des moyens de réaliser des murs de bâtiments.

Un procédé consiste à élever les murs avec des briques ou des parpaings liés au mortier avec coulage de poteaux et autres linteaux pour assurer la reprise des efforts mécaniques puis de rapporter une isolation par l'extérieur mais le plus souvent par l'intérieur.

Cette isolation intérieure est à base de matériaux de synthèse tel que du polystyrène avec un doublage par des plaques de plâtre ou à base de laine de verre et une cloison de carreaux de plâtre ou des combinaisons de ces solutions. L'isolation au moyen de matériaux de synthèse dérivés du pétrole ou gourmands en énergie à la fabrication n'est pas idéale.

Il existe bien des matériaux naturels comme le chanvre, présentant de nombreux avantages, comme un haut pouvoir isolant, une production renouvelable, un recyclage ou une élimination sans soucis, un coût déjà raisonnable même avec de faibles productions.

L'inconvénient de ces matériaux est leur faible tenue et leur propension à absorber l'humidité et donc à ne pas pouvoir être utilisés en présence d'eau notamment en isolation par l'extérieur.

De plus, la construction a fortement évolué et les bâtiments doivent être réalisés le plus rapidement possible.

Il faut donc réaliser des panneaux en usine avec des moyens de forte production avec une très grande reproductibilité, une grande précision et une très bonne qualité de façon à permettre des assemblages ajustés sur le lieu de pose.

Ces panneaux doivent aussi pouvoir être mis en place aisément avec des moyens de levage peu puissants, couramment disponibles sur chantier.

De plus en plus, il est requis d'intégrer, lors de la préfabrication, les équipements comme les dormants des menuiseries des ouvertures, les gainages des câblages électriques et de tuyauteries de chauffage ou autres, les boîtiers de connexion.

De tels panneaux doivent aussi présenter des caractéristiques suffisantes de résistance mécanique pour autoriser une élévation au moins R + 1.

Enfin, les panneaux doivent être reliés entre eux mécaniquement de façon satisfaisante, surtout sans pénaliser l'isolation donc en éliminant les ponts thermiques.

On connaît la demande de brevet WO 94/028264 qui décrit une âme en matériau isolant de part et d'autre duquel sont disposées des armatures métalliques sous forme d'un treillis, afin de pouvoir couler des faces en béton. Les armatures de part et d'autre du matériau isolant sont liées par des tirants soudés auxdites armatures et traversant ledit matériau isolant. Le document EP 094 175 décrit des panneaux multicouches avec des bétons à plus ou moins forte porosité induite par des quantités différentes d'agents porogènes. Ces panneaux incluent des fibres de renfort.

Le document WO 98/16697 décrit un procédé de fabrication d'un mur avec des panneaux externes en fibrociment formant coffrage et coulage d'un béton très liquide in situ dans le coffrage, lesdits panneaux absorbant suffisamment l'humidité pour assurer la liaison entre le béton coulé et les panneaux.

A cet effet, la présente invention propose un procédé de réalisation selon la revendication 1 d'un panneau pour la fabrication d'un bâtiment, intégrant des fibres de chanvre, prêt à poser.

L'invention couvre aussi le panneau selon la revendication 6 obtenu selon l'une quelconque des revendications de procédé.

Le procédé est décrit suivant un mode de réalisation particulier, non limitatif, en regard des dessins annexés qui montrent sur les différentes figures :
- figure 1 : une vue d'un panneau obtenu par le procédé selon l'invention,
- figure 2 : une vue de deux panneaux de façade, posés dans un même plan, prêts à être liés,
- figure 3 : une vue de deux panneaux d'angle, posés, prêts à être liés,
- figure 4 : une vue détaillée de l'agencement d'angle,
- figure 5 : une vue de la liaison de deux panneaux d'angle,
- figure 6 : une vue détaillée de la liaison d'angle,
- figure 7 : une vue de la réalisation d'un panneau structuré, et
- figures 8A, 8B et 8C : des vues d'un perfectionnement de réalisation.

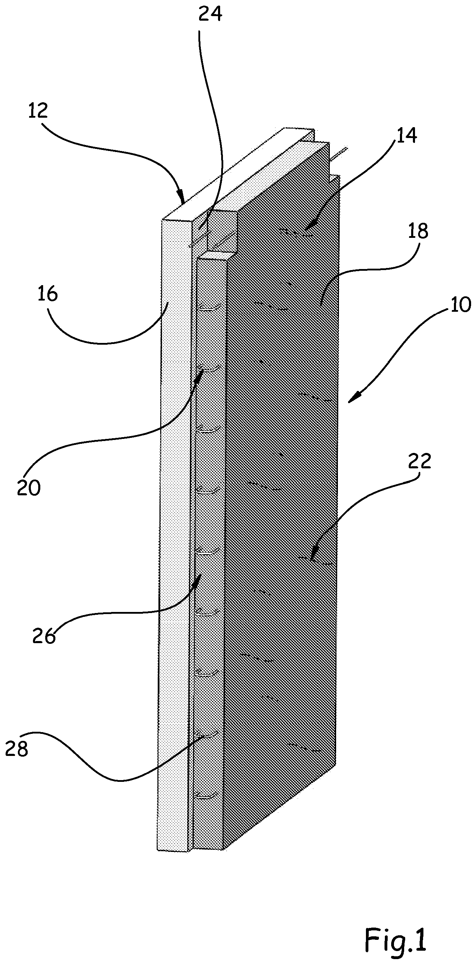

Sur la figure 1, on a représenté un panneau 10 selon la présente invention, comprenant au moins une face 12 intérieure et une face 14 extérieure.

La face 12 intérieure est constituée d'un béton 16 de fibres naturelles, selon l'invention en l'occurrence des fibres de chanvre. Les fibres naturelles auraient pu être choisies de la même façon parmi le lin, la paille et/ou des copeaux de bois ou une combinaison de fibres naturelles.

On utilise la composition inventive de béton de chanvre ayant les formulations suivantes :
Les pourcentages sont exprimés en masse.

La chènevotte est la partie centrale et moelleuse de la tige de chanvre.
- Chènevotte fibrée : 11,0 %
- Chènevotte standard : 5,5 %
- Liant à la chaux : 34,0 %
- Eaux qsp

Ceci permet de réaliser des panneaux de 18 cm d'épaisseur présentant une conductivité thermique de 0,08W/m.K et une masse volumique état sec de 350kg/m³.

Ce béton est réalisé par mixage dans une unité de type connue comprenant un malaxeur à pales de façon à obtenir une bonne répartition des fibres dans la masse.

Le procédé consiste à déposer ce béton à base de fibres naturelles de chanvre en une couche monolithique sur un moule M.

Avantageusement, ce moule comprend, pré-positionnés, les dormants des menuiseries des ouvertures avec leurs réserves ainsi que les gaines de service prévues pour recevoir les tubes d'amenées de fluides et les câbles électriques et de communication qui sont ainsi noyés ultérieurement dans cette couche de béton de fibres naturelles.

La face 14 extérieure est constituée d'un 18 béton léger hydrophobe.

Un tel béton dispose d'une résistance mécanique importante et surtout, cette couche inclut des ferraillages 20, comme il sera expliqué plus avant.

On utilise comme béton structurel la composition inventive suivante dont les pourcentages sont exprimés en masse :

| | |
|---|---|
| - Ciment : | 23,0 % |
| - Sable : | 40,0 % |
| - Argile expansée 0/5 : | 12,0 % |
| - Argile expansée 5/15 : | 12,0 % |
| - Eau qsp | |

On obtient bien une résistance à la compression importante à 28 jours puisqu'elle est supérieure à 15 MPa. La masse volumique est de 1550 kg/m3 et autorise la réalisation de parois de 18 cm d'épaisseur avec une conductivité thermique de 0,70 W/m.K.

Un problème se pose pour la réalisation de ces panneaux à l'interface entre les deux couches.

En effet, pour assurer la solidarisation des deux faces, il est prévu d'introduire des connecteurs 22 mécaniques, par exemple métalliques, dans le premier béton de fibres naturelles qui sont dépassants afin de voir ces extrémités dépassantes noyées dans la couche de béton léger.

Pour assurer une interface de qualité entre les deux couches et pour permettre la superposition des deux couches avant durcissement, de façon surprenante, les titulaires ont constaté qu'une couche 24 complémentaire de matériau siliceux, par exemple une barbotine de matériau siliceux, permet d'assurer une interface satisfaisante sans pénaliser la résistance mécanique de l'ensemble et sans altérer les propriétés isolantes, mécaniques de l'une ou l'autre des faces. Après prise des bétons et séchage suffisant, les panneaux sont manipulables, ceci de façon connue en fabrication industrielle de panneaux béton, généralement au moyen d'ancres à œil noyées préalablement dans le panneau.

Le procédé prévoit aussi un système 26 de liaison des panneaux entre eux suivant les différents agencements nécessaires dans un bâtiment, panneaux de façade ou panneaux d'angle. En l'occurrence, seul un angle sortant est exemplifié mais il en serait de même pour un angle rentrant. Les angles sont à 90° mais ils pourraient de la même façon être inférieur ou supérieur à 90° sans pour autant modifier la portée de la présente demande de brevet.

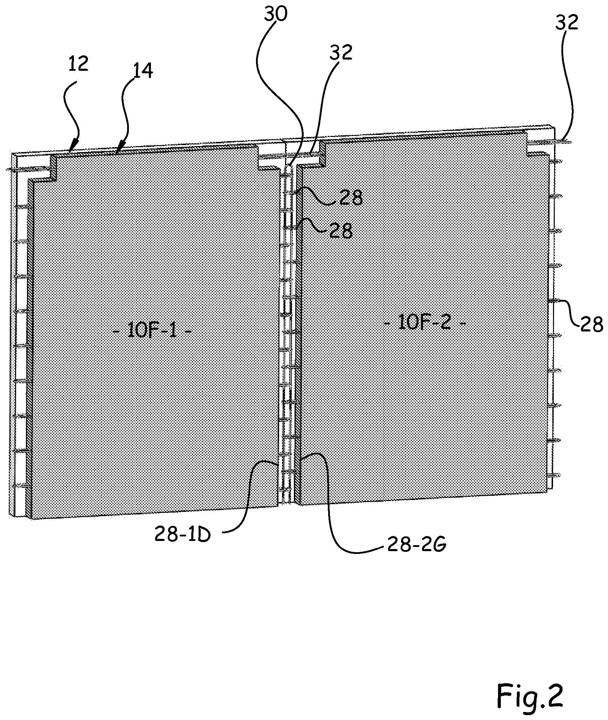

Le système 26 de liaison pour les panneaux de façade est illustré sur les figures 1 et 2.

Chaque panneau 10F de façade comprend des épingles 28 en saillie sur les bords latéraux verticaux.

Ces épingles 28 sont disposées en quinconce sur les deux bords d'une même plaque de façon à permettre une interpénétration lors du rapprochement de deux panneaux 10F-1 et 10F-2.

Lorsque ces deux panneaux sont juxtaposés et ajustés, il est possible de claveter ces deux panneaux au moyen d'une tige 30 verticale, apte à être introduite dans les épingles 28-1D et 28-2G des deux panneaux.

De même, en partie supérieure, des ferraillages 32 de chaînage filants sont laissés en attente et en saillie.

La face 14 extérieure est dotée des réserves R nécessaires tandis que la face intérieure est juxtaposée, jointive bord à bord. La face intérieure forme le coffrage intérieur et se trouve parfaitement continue.

Il convient ensuite d'installer un coffrage plan pour couler un béton léger dans cette réserve R, de préférence de la même nature que celui qui compose la face extérieure permettant ainsi de noyer les ferraillages, tant de liaison des panneaux que les ferraillages filants de chaînage. On note de nouveau que les ponts thermiques sont évités puisque la face intérieure 12 est continue.

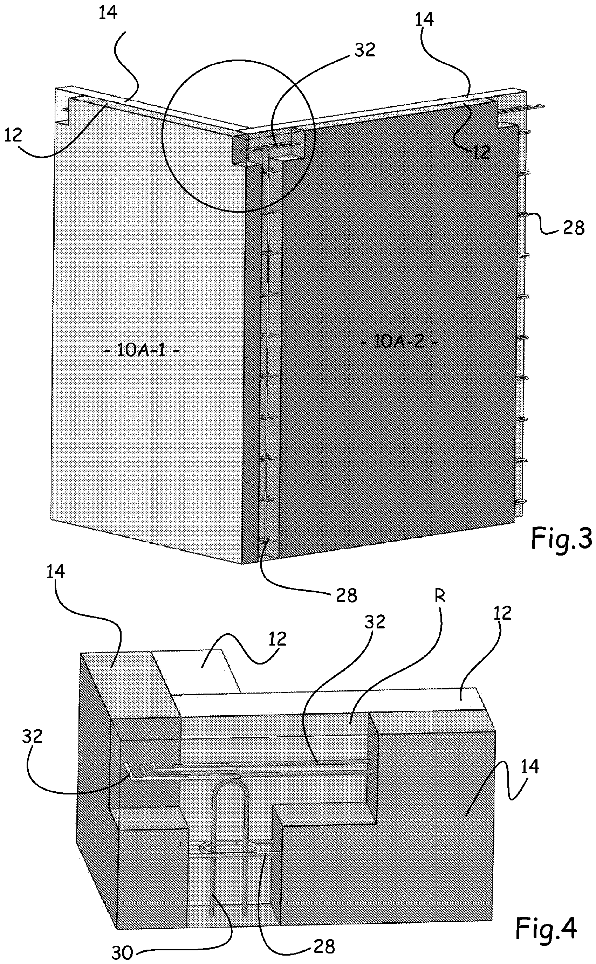

Dans le cas d'un angle, tel que représenté sur la figure 3 et en détail sur la figure 4, la réserve R est de forme en T pour donner un mode de réalisation, ménagée sur une face de l'un 10A-1 des panneaux 10A-1 et 10A-2.

Les ferraillages 32 de chaînage sont coudés pour assurer une continuité et une superposition suffisante des longueurs pour assurer une reprise mécanique satisfaisante.

La tige 30 est introduite de la même façon que précédemment dans les épingles 28 disposées en quinconce. On note que, dans le mode préféré de réalisation, l'un des panneaux présente des épingles agencées perpendiculairement au plan général du panneau de façon à réaliser la mise en quinconce des épingles dans le plan d'un panneau et non en angle.

Les faces 12 intérieures, réalisées en béton de fibres naturelles, assurent la continuité de l'isolation.

De la même façon que précédemment, du béton léger de la même nature que celui qui constitue la face extérieure 14 est coulé dans un coffrage, in situ, une fois les panneaux positionnés de façon adaptée pour combler la réserve R et noyer les ferrailles.

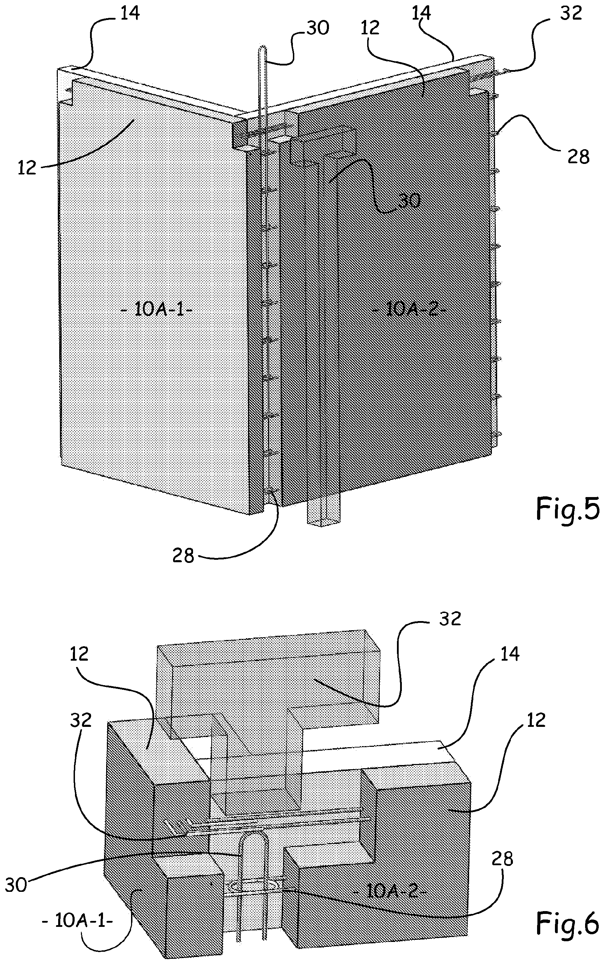

On voit clairement le volume de béton à adjoindre sur les figures 5 et 6 où le béton léger est représenté en transparence.

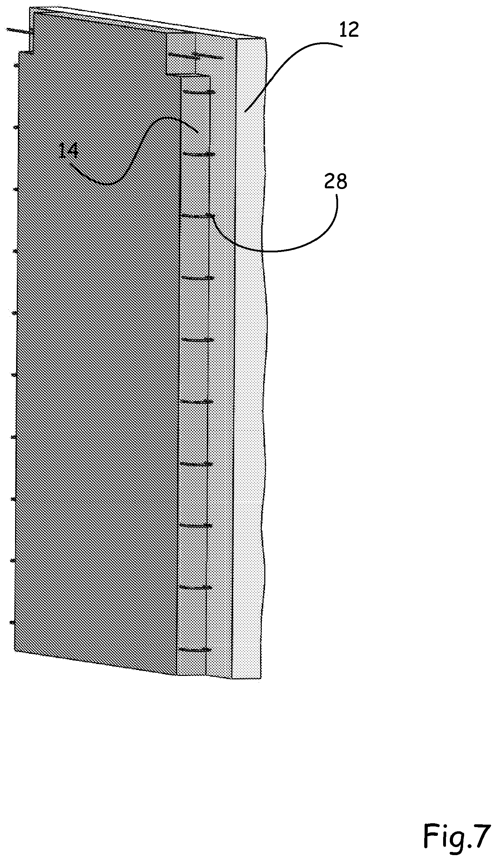

Sur la figure 7, on a représenté une des possibilités qu'offre le procédé selon la présente invention.

Précédemment, il a été indiqué que les dormants des huisseries et les réseaux de câblage ou autres prises de connectique pouvaient être intégrés dans la face intérieure, réalisée en béton isolant à base de fibres naturelles.

Cette face intérieure peut aussi permettre l'obtention d'effets esthétiques structurant comme des vagues ou ondulations pour ne citer que ceux-là.

Ceci dépend du moule M utilisé qui peut présenter toute forme esthétique.

Ceci ne modifie en rien le caractère technique du panneau mais cela permet des configurations esthétiques qu'il n'était pas possible d'obtenir avec des panneaux de plaques de plâtre par exemple.

La face extérieure quant à elle est lissée lors de la fabrication pour permettre ultérieurement l'application de tout revêtement de finition, tout parement, tout enduit.

Ces panneaux étant liés entre eux, il est nécessaire de les solidariser avec le reste de la structure. Suivant le mode de réalisation de la dalle, il sera prévu des ferraillages en attente, des tiges de liaison rapportés et collées de façon à réaliser une reprise au sol. Ces ferraillages sont en attente, pré-positionnés au droit des poteaux à réaliser et venant également dans les épingles 28 comme la tige 30, renforçant simultanément le clavetage.

De façon connue, le plancher est réalisé flottant.

En partie supérieure, les murs reçoivent la charpente de façon connue et les pignons sont réalisés avec la charpente et non avec les murs comme dans la construction traditionnelle.

Le procédé de fabrication selon la présente invention est très efficace du point de vue isolation.

Si le mur mentionné en exemple est complété après montage par un enduit extérieur ou un bardage de 1,5 cm et en intérieur un enduit à la chaux de 1,5 cm au maximum, on obtient les résultats suivants :

| **Constituants** | *ρ* sec (kg/m³) | Epaisseur (m) | λ(W/m.K) | R (m².K/W) |
|---|---|---|---|---|
| Enduit / bardage | 800,00 | 0,015 | 0,17 | 0,09 |
| Béton structurel | 1550,00 | 0,180 | 0,70 | 0,26 |
| Béton de chanvre | 350,00 | 0,180 | 0,08 | 2,25 |
| Enduit Chanvre | 800,00 | 0,015 | 0,17 | 0,09 |
| **MUR COMPLET** | | **0,39** | | **2,85** |

La valeur Up de déperdition thermique d'un tel mur est de 0,36 m2.K/W.

Chaque panneau est d'un poids généralement inférieur à 4 tonnes pour permettre un levage et une manipulation avec un engin de manutention de chantier.

Le procédé selon l'invention se trouve donc être très industrialisable en recourant aux moyens de production connus et déjà existants.

Les panneaux produits sont très isolants, simples à mettre en place, parfaitement dimensionnés avec une forte reproductibilité.

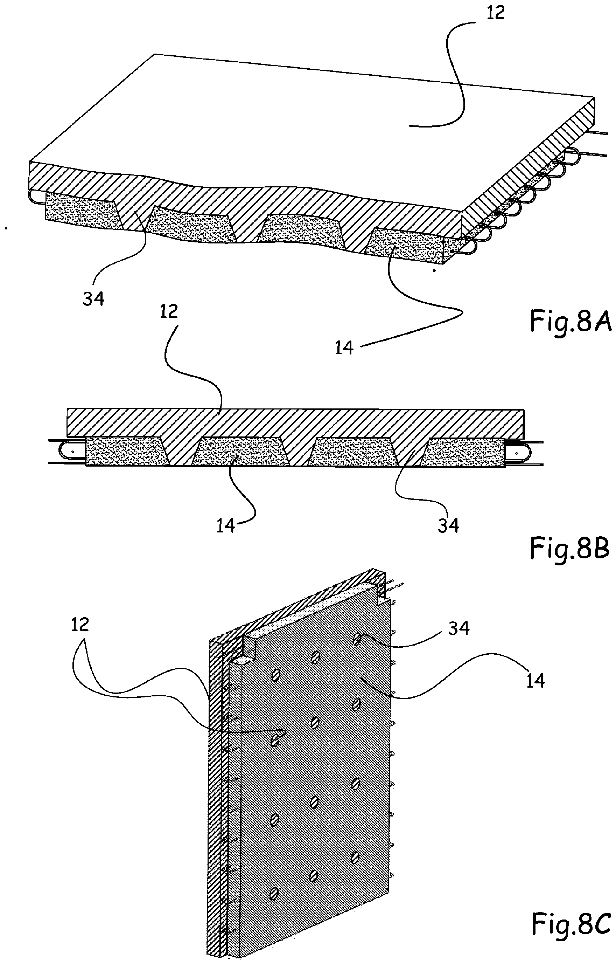

Afin de faciliter le séchage à l'interface et d'éviter si cela est nécessaire toute condensation entre les deux volumes Béton structurel et le béton en fibres naturelles, la présente invention propose, comme illustré sur les figures 8, la réalisation de plots 34 venus de fabrication avec la paroi de béton de fibres naturelles qui se prolongent à travers la paroi de béton structurel.

Un procédé de réalisation simple consiste à prévoir des inserts placés dans le panneau de béton structurel, de forme tronconique notamment, qui sont retirés avant prise complète du béton structurel.

Lors du coulage du béton de fibres naturelles, celui -ci recouvre le panneau de béton structurel et comble les logements laissés libres par le retrait des inserts formant des plots 34.

## Revendications

1. Procédé de fabrication de panneaux (10) avec isolation intégrée notamment pour la réalisation de bâtiments, le procédé comprend les étapes suivantes :
- coulage d'un béton incluant des fibres de chanvre dans un moule M, pour former une face (12) intérieure dudit panneau, le béton de chanvre ayant la composition suivante prise en pourcentage en masse :
- Chènevotte fibrée : 11,0 %
- Chènevotte standard : 5,5 %
- Liant à la chaux : 34,0 %
- Eau quantité suffisante pour arriver à 100 % ;
- coulage d'un béton léger hydrophobe, en présence de ferraillages préalablement positionnés, pour former une face extérieure (14) dudit panneau,
- aménagement de ferrailles (28) en bordure de chaque panneau pour assurer un clavetage et aménagement de ferrailles (32) en chaînage.

2. Procédé de fabrication de panneaux (10) selon la revendication 1, **caractérisé en ce qu'**il comprend une étape supplémentaire de dépose d'une couche de matériaux siliceux en interface entre les faces intérieure (12) et extérieure (14).

3. Procédé de fabrication de panneaux (10) selon la revendication 1 ou 2, **caractérisé en ce que** l'on introduit des connecteurs mécaniques entre les deux faces lors du coulage de sorte à relier mécaniquement lesdites deux faces.

4. Procédé de fabrication de panneaux (10) selon l'une quelconque des revendications précédentes, **caractérisé en ce que** l'on coule un béton incluant des fibres naturelles de chanvre.

5. Procédé de fabrication de panneaux (10) selon l'une quelconque des revendications précédentes, **caractérisé en ce que** l'on pré-positionne préalablement dans le moule M, des dormants d'huisseries, des gaines des réseaux fluidiques et électriques, des boîtiers de connexion, dans la face intérieure.

6. Panneau de construction, réalisé à partir du procédé selon l'une quelconque des revendications précédentes, le panneau présente la composition suivante prise en pourcentage en masse :
*Panneau de chanvre :*
| | |
|---|---|
| - Chènevotte fibrée : | 11,0 % |
| - Chènevotte standard : | 5,5 % |
| - Liant à la chaux : | 34,0 % |
- Eau en quantité suffisante pour arriver à 100 %.
*Panneau béton léger* :
| | |
|---|---|
| - Ciment : | 23,0 % |
| - Sable : | 40,0 % |
| - Argile expansée 0/5 : | 12,0 % |
| - Argile expansée 5/15 : | 12,0 % |
- Eau en quantité suffisante pour arriver à 100 %.

## Patentansprüche

1. Verfahren zum Herstellen von Paneelen (10) mit integrierter Dämmung, insbesondere für die Konstruktion von Gebäuden, wobei das Verfahren die folgenden Schritte umfasst:
- Gießen eines Betons, der Hanffasern enthält, in eine Form M, um eine Innenseite (12) des Paneels zu bilden, wobei der Hanfbeton die folgende Zusammensetzung in Masseprozent aufweist:
- faserige Schäben: 11,0 %
- Standardschäben: 5,5 %
- Kalkbindemittel: 34,0 %
- ausreichende Wassermenge, um 100 % zu erreichen;
- Gießen eines hydrophoben Leichtbetons in Gegenwart von zuvor positionierten Armierungen, um eine Außenseite (14) des Paneels zu bilden,
- Anordnen von Armierungen (28) am Rand jedes Paneels, um ein Keilverbinden und Anordnen von Armierungen (32) in Verbindung sicherzustellen.

2. Verfahren zum Herstellen von Paneelen (10) nach Anspruch 1, **dadurch gekennzeichnet, dass** es einen zusätzlichen Schritt des Aufbringens einer Schicht aus siliziumhaltigen Materialien an der Grenzfläche zwischen der Innenseite (12) und der Außenseite (14) umfasst.

3. Verfahren zum Herstellen von Paneelen (10) nach Anspruch 1 oder 2, **dadurch gekennzeichnet, dass** während des Gießens mechanische Verbinder zwischen die zwei Seiten eingeführt werden, um die zwei Seiten mechanisch zu verbinden.

4. Verfahren zum Herstellen von Paneelen (10) nach einem der vorhergehenden Ansprüche, **dadurch gekennzeichnet, dass** ein Beton gegossen wird, der natürliche Hanffasern enthält.

5. Verfahren zum Herstellen von Paneelen (10) nach einem der vorhergehenden Ansprüche, **dadurch gekennzeichnet, dass** zuvor in der Form M Türrahmen, Leerrohre für das Fluid- und Stromnetz und Anschlusskästen in der Innenseite vorpositioniert werden.

6. Baupaneel, konstruiert mit dem Verfahren nach einem der vorhergehenden Ansprüche, wobei das Paneel die folgende Zusammensetzung in Massenprozent aufweist:
*Hanfpaneel:*
- faserige Schäben: 11,0 %
- Standardschäben: 5,5 %
- Kalkbindemittel: 34,0 %
- Wasser in ausreichender Menge, um 100 % zu erreichen.
*Leichtbetonpaneel:*
- Zement: 23,0 %
- Sand: 40,0 %
- Blähton 0/5: 12,0 %
- Blähton 5/15: 12,0 %
- Wasser in ausreichender Menge, um 100 % zu erreichen.

## Claims

1. Method for producing panels (10) with integrated insulation, in particular for the construction of buildings, the method comprising the following steps:
- casting concrete which includes hemp fibers in a mold M to form an inner face (12) of said panel, the hemp concrete having the following composition taken as a percentage by mass:
- fibrous hemp hurd: 11.0%
- standard hemp hurd: 5.5%
- lime binder: 34.0%
- water in a quantity sufficient to reach 100%;
- casting a hydrophobic lightweight concrete, in the presence of pre-positioned reinforcements, to form an outer face (14) of said panel,
- arranging reinforcements (28) at the edge of each panel to ensure keying, and arranging reinforcements (32) in chaining.

2. Method for producing panels (10) according to claim 1, **characterized in that** it comprises an additional step of depositing a layer of siliceous materials at the interface between the inner (12) and outer (14) faces.

3. Method for producing panels (10) according to either claim 1 or claim 2, **characterized in that** mechanical connectors are introduced between the two faces during casting so as to mechanically connect said two faces.

4. Method for producing panels (10) according to any of the preceding claims, **characterized in that** concrete which includes natural hemp fibers is cast.

5. Method for producing panels (10) according to any of the preceding claims, **characterized in that** door frame casings, fluid and electrical network ducts and connection boxes are pre-positioned in the inner face of the mold M.

6. Construction panel, produced using the method according to any of the preceding claims, the panel having the following composition taken as a percentage by mass:
*Hemp panel:*
- fibrous hemp hurd: 11.0%
- standard hemp hurd: 5.5%
- lime binder: 34.0%
- water in a quantity sufficient to reach 100%.
*Lightweight concrete panel:*
- cement: 23.0%
- sand: 40.0%
- expanded clay 0/5: 12.0%
- expanded clay 5/15: 12.0%
- water in a quantity sufficient to reach 100%.
